# EUROPEAN PATENT APPLICATION

(11) **EP 4 023 476 A1**
(43) Date of publication of application: **06.07.2022**
(21) Application number: 20890462.3
(22) Date of filing: 06.07.2020
(51) Int. Cl.: B60K 6/26, B60K 6/36, B60K 6/40, B60K 6/44, B60K 6/50

(54) **HYBRID SINGLE-SPEED AUTOMOBILE POWER SYSTEM**

(30) Priority: 18.11.2019 CN 201911127073
(71) Applicant: Jing-Jin Electric Technologies Co., Ltd., Beijing 100016 (CN)
(72) Inventor: GUO, Weijie, Beijing 100016 (CN); WANG, Xueliang, Beijing 100016 (CN); LI, Jianwen, Beijing 100016 (CN)
(74) Representative: Petraz, Gilberto Luigi
(86) International application number: PCT/CN2020/100318
(87) International publication number: WO 2021/098221

(57) **Abstract**

A complex-connection single-gear vehicle power system is disclosed, which comprises an engine (1), an ISG motor (3), an engine transmission mechanism, an electromagnetic clutch, a drive motor (5), a drive motor transmission mechanism and a power output shaft, wherein the ISG motor (3) and the drive motor (5) are disposed on different shafts; the ISG motor (3) is disposed on a transmission shaft of the engine transmission mechanism, or is disposed on a shaft different from the transmission shaft of the engine transmission mechanism; the electromagnetic clutch is disposed on the transmission shaft of the engine transmission mechanism or the power output shaft, and an end gear of the engine transmission mechanism is disposed at an end of the power output shaft; and an end gear of the drive motor transmission mechanism is also disposed on the power output shaft. The present disclosure can realize at least five working modes by setting the positions of the TM motor, ISG motor (3) and electromagnetic clutch. The power output of the vehicle is improved by three-stage transmission of the TM motor and two-stage transmission of the engine (1). Moreover, the power system has the merits such as a simple structure and low manufacturing cost.

## Description

### TECHNICAL FIELD

The present disclosure relates to the field of vehicle power, in particular to a complex-connection single-gear vehicle power system.

### BACKGROUND

The popular fuel engine vehicles currently used have various shortcomings. With the increasing call for environmental protection worldwide, various electric vehicles stand out. Although it is generally believed that the future belongs to electric vehicles, the problems relating to battery technology hinder the application of electric vehicles. As the energy density of the battery is significantly lower than that of gasoline and is far lower than the required value, electric vehicles cannot replace fuel engine vehicles, and thus hybrid vehicles came into being. The hybrid vehicles not only have the merit of long continuous working time of the engine, but also reduces pollution emission.

As the vehicle power system changes from single power to hybrid power, the transmission structure of the vehicle also changes. At present, in order to realize hybrid power, the vehicle power system may comprise two-stage transmissions of engine and motor, which cannot guarantee sufficient power for the vehicle. Alternatively, it may comprise a combination of two-stage and three-stage transmissions, and is equipped with one or more traditional clutches, however, there are problems such as large attenuation of the vehicle power system and obvious sensation of jerking during gear shifting.

### SUMMARY

In view of the above problems, the present disclosure is proposed to provide a complex-connection single-gear vehicle power system to solve or at least partially solve the above problems.

In order to achieve the above object, the present disclosure adopts the following technical solutions.

The present disclosure provides a complex-connection single-gear vehicle power system, comprising: an engine, an ISG motor, an engine transmission mechanism, an electromagnetic clutch, a drive motor, a drive motor transmission mechanism and a power output shaft, wherein
the ISG motor and the drive motor are disposed on different shafts;
the ISG motor is disposed on a transmission shaft of the engine transmission mechanism, or is disposed on a shaft different from the transmission shaft of the engine transmission mechanism and is connected with the transmission shaft through a gear pair;
the electromagnetic clutch is disposed on the transmission shaft of the engine transmission mechanism or the power output shaft, and an end gear of the engine transmission mechanism is disposed at an end of the power output shaft; and
an end gear of the drive motor transmission mechanism is also disposed on the power output shaft.

Optionally, the engine transmission mechanism comprises an engine output shaft and a first output shaft, the engine output shaft is provided thereon with the ISG motor, the electromagnetic clutch and a first gear, a side of the first gear that is close to the electromagnetic clutch is provided thereon with coupling teeth, and the first gear is sleeved on the engine output shaft; and
the first output shaft and the power output shaft are the same shaft, and the first output shaft is provided thereon with a second gear.

Optionally, the engine transmission mechanism comprises an engine output shaft and a first output shaft, the engine output shaft is provided thereon with the ISG motor and a first gear, the first output shaft and the power output shaft are coaxial and spaced apart from each other, the first output shaft is provided thereon with a second gear, a side of the second gear that is close to the electromagnetic clutch is provided thereon with coupling teeth, and the electromagnetic clutch is disposed on the power output shaft.

Optionally, the ISG motor is disposed on a shaft different from the engine output shaft, and is connected with the engine output shaft through a gear pair.

Optionally, the electromagnetic clutch comprises an inner sleeve and a coil, the coil of the electromagnetic clutch is disposed in the inner sleeve of the electromagnetic clutch, and an end face of the inner sleeve of the electromagnetic clutch is provided thereon with coupling teeth.

Optionally, the drive motor transmission mechanism comprises a drive motor output shaft, an intermediate shaft and a second output shaft, and the second output shaft and the power output shaft are the same shaft;
the drive motor output shaft is provided thereon with a seventh gear, the intermediate shaft is provided thereon with an eighth gear and a fifth gear, and the second output shaft is provided thereon with a sixth gear.

Optionally, the engine output shaft and the drive motor output shaft are respectively disposed on two sides of the power output shaft, and the intermediate shaft and the engine output shaft are coaxial and spaced apart from each other.

Optionally, the ISG motor is fixed on the engine output shaft and is coaxially arranged with the engine output shaft, or is not coaxial with the transmission shaft of the engine transmission mechanism and is connected with it through a gear pair.

Optionally, an output shaft of the ISG motor is connected with the engine output shaft via a damper.

Optionally, the drive motor is a TM motor.

Optionally, a middle part of the power output shaft is provided thereon with a third gear, and the third gear drives a differential to rotate through a fourth gear.

The complex-connection single-gear vehicle power system has the following advantages.

The present disclosure can realize at least five working modes by setting the positions of the TM motor, ISG motor and electromagnetic clutch. The ISG motor and the TM motor are provided on different shafts, the three-stage deceleration of the TM motor provides sufficient power for the vehicle. The two-stage transmission output of the engine ensures high efficient operation of the engine when the vehicle is running at high speed. The ISG motor is connected with the engine directly or through a gear pair, which effectively reduces the transmission loss and improves the power generation efficiency. By having the power system according to the present disclosure, the power attenuation of the whole vehicle is less and there is no sensation of jerking during gear shifting. Moreover, the power system according to the present disclosure has a simple structure and low manufacturing cost.

The above is only an overview of the technical solutions of the present disclosure. In order to better understand the technical means of the present disclosure so that it can be implemented according to the contents of the description, and in order to make the above and other objects, features and advantages of the present disclosure more obvious and easier to understand, the specific embodiments of the present disclosure are given below.

### BRIEF DESCRIPTION OF DRAWINGS

By reading the detailed description of the preferred embodiments below, various other advantages and benefits will become clear to a person of ordinary skill in the art. The drawings are only used for the purpose of illustrating the preferred embodiments, and should not be considered as a limitation to the present disclosure. Moreover, throughout the drawings, like reference numerals denote like components. In the drawings:
FIG. 1 is a schematic view of the structure of a complex-connection single-gear vehicle power system according to an embodiment of the present disclosure;
FIG. 2 is a schematic view of the structure of a complex-connection single-gear vehicle power system according to another embodiment of the present disclosure;
FIG. 3 is a schematic view of the structure of a complex-connection single-gear vehicle power system according to yet another embodiment of the present disclosure; and
FIG. 4 is a schematic view of the structure of a complex-connection single-gear vehicle power system according to still yet another embodiment of the present disclosure.

In the drawings: 1. engine; 2. damper; 3. ISG motor; 4. first gear; 5. drive motor; 6. second gear; 7. third gear; 8. fourth gear; 9. differential; 10. sixth gear; 11. coil of electromagnetic clutch; 12. inner sleeve of electromagnetic clutch; 13. fifth gear; 14. eighth gear; 15. seventh gear; 16 gear pair.

### DETAILED DESCRIPTION

Illustrative embodiments of the present disclosure will be described in more detail with reference to the drawings. Although the drawings show the illustrative embodiments of the present disclosure, it should be understood that the present disclosure can be implemented in various ways and should not be limited by the embodiments disclosed herein. On the contrary, the embodiments are provided for a more thorough and complete understanding of the present disclosure, so as to fully convey the scope of the present disclosure to those skilled in the art.

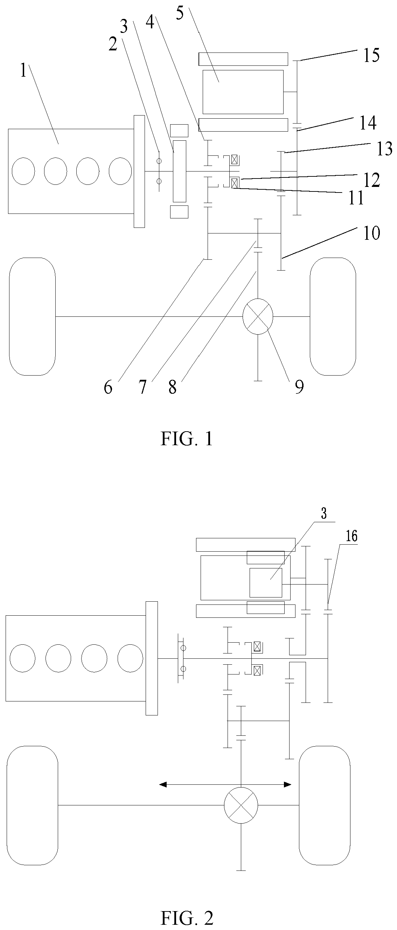

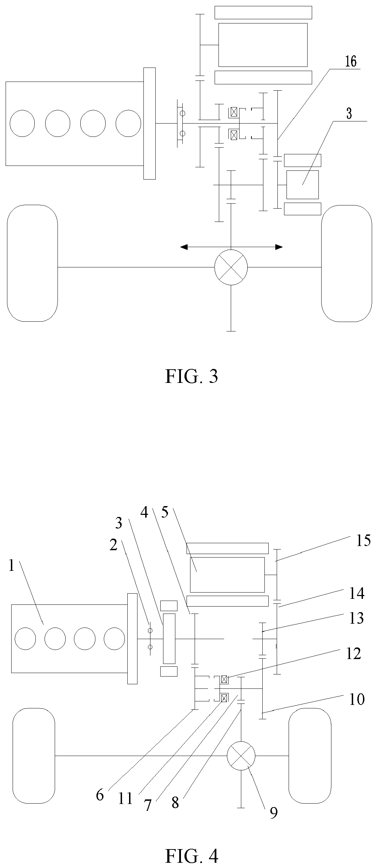

An embodiment of the present disclosure provides a complex-connection single-gear vehicle power system. As shown in FIGS. 1-4, the power system comprises: an engine 1, an ISG motor 3, an engine transmission mechanism, an electromagnetic clutch, a drive motor 5, a drive motor transmission mechanism and a power output shaft. The ISG motor 3 and the drive motor 5 are disposed on different shafts. The ISG motor 3 is disposed on a transmission shaft of the engine transmission mechanism (see FIG. 1 and FIG. 4); alternatively, it is disposed on a shaft different from the transmission shaft of the engine transmission mechanism, and is connected with the transmission shaft through a gear pair 16 (see FIG. 2 and FIG. 3). FIG. 2 and FIG. 3 are modifications of FIG. 1, and they differ from FIG. 1 mainly in the position of the ISG motor.

The ISG motor 3 is directly or indirectly connected with the engine 1, which improves the power generation efficiency of the ISG motor 3. The ISG motor 3 can be used to start the engine 1 or charge the vehicle battery. The electromagnetic clutch is disposed on the transmission shaft of the engine transmission mechanism or the power output shaft. The electromagnetic clutch has two states: in gear or not in gear. The engine 1 is controlled to drive or not to drive the vehicle by changing the state of the electromagnetic clutch. When the electromagnetic clutch is in gear, the engine 1 provides driving power for the vehicle. When the electromagnetic clutch is not in gear, the engine 1 does not provide driving power for the vehicle. The end gear of the engine transmission mechanism is disposed at an end of the power output shaft. The end gear of the drive motor transmission mechanism is also disposed on the power output shaft.

The power system in the present disclosure comprises two power devices: the engine 1 and the drive motor 5. The two power devices work independently and drive the vehicle through the engine transmission mechanism and the drive motor transmission mechanism respectively.

Referring to table 1 below, the power system can provide five driving modes: pure electric mode, series mode, parallel mode, engine direct drive mode and brake recovery mode. When the driving mode is in the pure electric mode, the engine 1 and ISG motor 3 do not work, the electromagnetic clutch is not in gear, the drive motor 5 works, and only the drive motor 5 provides power to drive the vehicle. When the driving mode is in the series mode, the ISG motor 3 works; at the same time, the ISG motor 3 starts the engine 1 to make the engine 1 work, the electromagnetic clutch is not in gear, and the drive motor 5 works. At this point, the engine 1 drives the ISG motor 3 to generate and supply electricity to the vehicle battery, and the drive motor 5 provides power to the vehicle. When the drive mode is in the parallel mode, the engine 1 works, the ISG motor 3 may work or may not work, the electromagnetic clutch is in gear, and the drive motor 5 works. At this point, both the engine 1 and the drive motor 5 provide power to drive the vehicle, and the ISG motor 3 is in the power generation or non-power generation state. When the driving mode is in the engine direct drive mode, the engine 1 works, the ISG motor 3 does not work, the electromagnetic clutch is in gear, and drive motor 5 does not work. At this point, engine 1 provides power to drive the vehicle, and drive motor 5 is in an idling state. When the driving mode is in the brake recovery mode, the engine 1 and ISG motor 3 do not work, the electromagnetic clutch is not in gear, and the drive motor 5 works. At this point, the drive motor 5 brakes the vehicle by reverse thrust, and the drive motor 5 converts the kinetic energy of the vehicle into electric energy and stores it back to the vehicle battery.

**Table 1**

| **Drive mode** | **Engine** | **ISG motor** | **Electromagnetic clutch** | **Drive motor** | **Notes** |
|---|---|---|---|---|---|
| Pure electric | Not work | Not work | Not in gear | Work | Only the TM motor drives the vehicle. |
| Series | Work | Work | Not in gear | Work | The engine drives the ISG motor to generate electricity, and the TM motor drives the vehicle. |
| Parallel | Work | Work or not work | In gear | Work | Both the engine and the TM motor provide power to drive the vehicle, and the ISG motor is in the power generation or non-power generation state. |
| Engine direct drive | Work | Not work | In gear | Not work | The engine drives the vehicle, the TM motor is in an idling state. |
| Brake recovery | Not work | Not work | Not in gear | Work | The TM motor brakes the vehicle by reverse thrust. |

In an embodiment, as shown in FIGS. 1-4, the engine transmission mechanism comprises an engine output shaft and a first output shaft. The engine output shaft is provided thereon with an ISG motor 3, an electromagnetic clutch and a first gear 4. A side of the first gear 4 that is close to the electromagnetic clutch is provided thereon with coupling teeth, and the first gear 4 is sleeved on the engine output shaft. The coupling teeth on the side of the first gear 4 can mesh with the coupling teeth on the end face of an inner sleeve 12 of the electromagnetic clutch. The first output shaft and the power output shaft are the same shaft, and the first output shaft is provided thereon with a second gear 6. When the engine 1 drives the engine output shaft to rotate, the inner sleeve 12 of the electromagnetic clutch rotates with it. Since the first gear 4 is sleeved on the engine output shaft, when the electromagnetic clutch is not in gear, the first gear 4 will not rotate with the rotation of the engine output shaft. When the electromagnetic clutch is in gear, the coupling teeth on the side of the first gear 4 will mesh with the coupling teeth on the end face of the inner sleeve 12 of the electromagnetic clutch, and then the inner sleeve 12 of the electromagnetic clutch drives the first gear 4 to rotate, and then the engine output shaft drives the first output shaft to rotate through the engagement of the first gear 4 and the second gear 6.

In an embodiment, the engine transmission mechanism comprises an engine output shaft and a first output shaft. The engine output shaft is provided thereon with an ISG motor 3 and a first gear 4. The first output shaft and the power output shaft are coaxial and spaced apart from each other. The first output shaft is provided thereon with a second gear 6, and a side of the second gear 6 that is close to the electromagnetic clutch is provided thereon with coupling teeth. The electromagnetic clutch is disposed on the power output shaft, and the coupling teeth on the second gear 6 can mesh with the coupling teeth on the inner sleeve 12 of the electromagnetic clutch. When the engine 1 works, it drives the engine output shaft to rotate. The engine output shaft drives the first output shaft to rotate through the engagement of the first gear 4 and the second gear 6. The first output shaft and the power output shaft are spaced apart from each other, so the power output shaft will not rotate directly with the rotation of the first output shaft, and only when the electromagnetic clutch is in gear, and the coupling teeth on the second gear 6 mesh with the coupling teeth on the inner sleeve 12 of the electromagnetic clutch, the first output shaft drives the power output shaft to rotate.

In an embodiment, the ISG motor is disposed on a shaft different from the engine output shaft, and is connected with the engine output shaft through a gear pair. The specific connection way is shown in FIG. 2 and FIG. 3.

As shown in FIG. 2, the ISG motor 3 and the drive motor 5 may be disposed on the same side, and the output shafts of the two motors face the same direction. The output shaft of the ISG motor 3 is connected with the engine output shaft (or the extension of the engine output shaft) through the gear pair 16. At this point, the eighth gear 14 and the fifth gear 13 in the drive motor transmission mechanism are sleeved on the engine output shaft (or the extension).

As shown in FIG. 3, the ISG motor 3 and the drive motor 5 may be disposed on different sides. Preferably, the ISG motor and the power output shaft are coaxial and spaced apart from each other. Similarly, the output shafts of the ISG motor 3 and the drive motor 5 face the left direction in FIG. 3, and the output shaft of the ISG motor 3 is connected with the engine output shaft (or the extension of the engine output shaft) through the gear pair 16. At this point, the eighth gear 14 and the fifth gear 13 in the drive motor transmission mechanism are sleeved on the engine output shaft (or the extension). In FIG. 3, the drive motor transmission mechanism is located on the left side of the electromagnetic clutch, while the engine transmission mechanism is located on the right side of the electromagnetic clutch; this arrangement is opposite to that in FIGS. 1, 2 and 4.

In a preferred embodiment, the electromagnetic clutch comprises an inner sleeve 12 and a coil 11. The coil 11 of the electromagnetic clutch is disposed in the inner sleeve 12 of the electromagnetic clutch. There is enough space around the coil 11 of the electromagnetic clutch and the inner sleeve 12 of the electromagnetic clutch so that the coil 11 of the electromagnetic clutch is movable relative to the inner sleeve 12 of the electromagnetic clutch. The coil 11 of the electromagnetic clutch is fixed relative to the transmission shaft of the engine transmission mechanism or the power output shaft, and an end face of the inner sleeve 12 of the electromagnetic clutch is provided thereon with coupling teeth.

In an embodiment, the drive motor transmission mechanism comprises a drive motor output shaft, an intermediate shaft and a second output shaft, and the second output shaft and the power output shaft are the same shaft. The drive motor output shaft is provided thereon with a seventh gear 15, the intermediate shaft is provided thereon with an eighth gear 14 and a fifth gear 13, and the second output shaft is provided thereon with a sixth gear 10. When the drive motor 5 works, the drive motor output shaft rotates, the drive motor output shaft drive the intermediate shaft to rotate through the engagement of the seventh gear 15 and the eighth gear 14, and the intermediate shaft drive the second output shaft to rotate through the engagement of the fifth gear 13 and the sixth gear 10. The drive motor transmission mechanism is three-stage deceleration, which can provide sufficient torque for the vehicle and ensure the strong power of the vehicle.

In an embodiment, the engine output shaft and the drive motor output shaft are respectively disposed on two sides of the power output shaft, and the intermediate shaft and the engine output shaft are coaxial and spaced apart from each other.

In an embodiment, the output shaft of the ISG motor 3 is connected with the engine output shaft via a damper 2. The damper 2 is a torsional damper, which can reduce the torsional stiffness of the joint part between the engine crankshaft and the transmission system, and reduce the natural frequency of torsional vibration of the transmission system, increase the torsional damping of the transmission system, suppress the corresponding amplitude of torsional resonance, attenuate the transient torsional vibration caused by impact, eliminate the idle noise of transmission as well as the torsional vibration and noise of main reducer and transmission, and improve the engagement smoothness of clutch.

Further, the drive motor 5 is a TM motor. The TM motor is a high torque motor, and can provide sufficient power for the vehicle.

Further, the middle part of the power output shaft is provided thereon with a third gear 7, which drives the differential 9 to rotate through the fourth gear 8.

In sum, the complex-connection single-gear vehicle power system according to the present disclosure comprises an engine, an ISG motor, an engine transmission mechanism, an electromagnetic clutch, a drive motor, a drive motor transmission mechanism and a power output shaft, wherein the ISG motor and the drive motor are disposed on different shafts; the ISG motor is disposed on a transmission shaft of the engine transmission mechanism, or is disposed on a shaft different from the transmission shaft of the engine transmission mechanism; the electromagnetic clutch is disposed on the transmission shaft of the engine transmission mechanism or the power output shaft, and an end gear of the engine transmission mechanism is disposed at an end of the power output shaft; and an end gear of the drive motor transmission mechanism is disposed on the other end of the power output shaft. The present disclosure can realize at least five working modes by setting the positions of the TM motor, ISG motor and electromagnetic clutch; the power output of the vehicle is improved by three-stage transmission of the TM motor and two-stage transmission of the engine; moreover, the power system has the merits such as a simple structure and low manufacturing cost.

The above are only the specific embodiments of the present disclosure, but the protection scope of the present disclosure is not limited to this. Any person skilled in the art can easily think of changes, substitutions, or improvements within the technical scope disclosed by the present disclosure, which should be covered by the protection scope of the present disclosure.

## Claims

1. A complex-connection single-gear vehicle power system, comprising: an engine (1), an ISG motor (3), an engine transmission mechanism, an electromagnetic clutch, a drive motor (5), a drive motor transmission mechanism and a power output shaft, **characterized in that**:
the ISG motor (3) and the drive motor (5) are disposed on different shafts;
the ISG motor (3) is disposed on a transmission shaft of the engine transmission mechanism, or is disposed on a shaft different from the transmission shaft of the engine transmission mechanism and is connected with the transmission shaft through a gear pair (16);
the electromagnetic clutch is disposed on the transmission shaft of the engine transmission mechanism or the power output shaft, and an end gear of the engine transmission mechanism is disposed at an end of the power output shaft; and
an end gear of the drive motor transmission mechanism is also disposed on the power output shaft.

2. The power system according to claim 1, **characterized in that**: the engine transmission mechanism comprises an engine output shaft and a first output shaft, the engine output shaft is provided thereon with the ISG motor (3), the electromagnetic clutch and a first gear (4), a side of the first gear (4) that is close to the electromagnetic clutch is provided thereon with coupling teeth, and the first gear (4) is sleeved on the engine output shaft; and
the first output shaft and the power output shaft are the same shaft, and the first output shaft is provided thereon with a second gear (6).

3. The power system according to claim 1, **characterized in that**: the engine transmission mechanism comprises an engine output shaft and a first output shaft, the engine output shaft is provided thereon with the ISG motor (3) and a first gear (4), the first output shaft and the power output shaft are coaxial and spaced apart from each other, the first output shaft is provided thereon with a second gear (6), a side of the second gear (6) that is close to the electromagnetic clutch is provided thereon with coupling teeth, and the electromagnetic clutch is disposed on the power output shaft.

4. The power system according to claim 2 or 3, **characterized in that**: the ISG motor (3) is disposed on a shaft different from the engine output shaft, and is connected with the engine output shaft through a gear pair (16).

5. The power system according to claim 2 or 3, **characterized in that**: the electromagnetic clutch comprises an inner sleeve and a coil, the coil of the electromagnetic clutch is disposed in the inner sleeve of the electromagnetic clutch, and an end face of the inner sleeve of the electromagnetic clutch is provided thereon with coupling teeth.

6. The power system according to claim 5, **characterized in that**: the drive motor transmission mechanism comprises a drive motor output shaft, an intermediate shaft and a second output shaft, and the second output shaft and the power output shaft are the same shaft;
the drive motor output shaft is provided thereon with a seventh gear (15), the intermediate shaft is provided thereon with an eighth gear (14) and a fifth gear (13), and the second output shaft is provided thereon with a sixth gear (10).

7. The power system according to claim 6, **characterized in that**: the engine output shaft and the drive motor output shaft are respectively disposed on two sides of the power output shaft, and the intermediate shaft and the engine output shaft are coaxial and spaced apart from each other.

8. The power system according to claim 1, **characterized in that**: an output shaft of the ISG motor (3) is connected with the engine output shaft via a damper (2).

9. The power system according to any one of claims 1-3, **characterized in that**: the drive motor (5) is a TM motor.

10. The power system according to claim 9, **characterized in that**: a middle part of the power output shaft is provided thereon with a third gear (7), and the third gear (7) drives a differential (9) to rotate through a fourth gear (8).
